# NEUE EUROPÄISCHE PATENTSCHRIFT

(11) **EP 2 758 277 B3**
(45) Veröffentlichungstag dieser Patentschrift: **20.07.2022**
(45) Hinweis auf die Patenterteilung: 13.01.2016
(21) Anmeldenummer: 12753509.4
(22) Anmeldetag: 04.09.2012
(51) Int. Cl.: B60R 13/02, B60R 13/04, B60J 5/04, B29C 45/00

(54) **SÄULENABDECKUNG FÜR KRAFTFAHRZEUGE**
PILLAR COVERING FOR MOTOR VEHICLES
HABILLAGE DE MONTANT D'UN VÉHICULE AUTOMOBILE

(30) Priorität: 23.09.2011 EP 11182546
(43) Veröffentlichungstag der Anmeldung: 30.07.2014
(73) Patentinhaber: SAINT-GOBAIN GLASS FRANCE, 92400 Courbevoie (FR)
(72) Erfinder: SCHMIDT, Sebastian, 70176 Stuttgart (DE); BLANCHE, Luc-Henry, 71409 Schwaikheim (DE); RIEGLER, Ulrich, 31698 Lindhorst (DE)
(74) Vertreter: Schönen, Iris
(86) Internationale Anmeldenummer: PCT/EP2012/067198
(87) Internationale Veröffentlichungsnummer: WO 2013/041368

(56) Entgegenhaltungen:
- EP-A1- 1 695 808
- EP-A1- 2 113 422
- EP-A1- 2 272 718
- DE-A1- 3 831 274
- DE-A1- 4 219 344
- DE-A1-102007 024 149
- DE-U1- 20 201 528
- JP-A- 2009 029 252

## Beschreibung

Die Erfindung betrifft eine Säulenabdeckung für Kraftfahrzeuge und deren Verwendung.

Im Zuge immer strengerer Vorgaben zur Kohlendioxidemission von Kraftfahrzeugen gibt es starke Bestrebungen, das Gewicht eines Fahrzeugs und damit dessen Treibstoffverbrauch zu senken. Stetige Weiterentwicklungen im Bereich der Kunststoffe ermöglichen den Ersatz von großen Teilen der Metallkarosserie durch entsprechend leichtere Elemente aus polymeren Werkstoffen. Insbesondere Teile oder auch der gesamte Fensterbereich können durch Elemente aus polymeren Werkstoffen ersetzt werden. Diese zeigen in vielen Fällen bei einem deutlich niedrigeren Gewicht eine vergleichbare Härte, Stabilität und Belastbarkeit wie bei einem Karosseriefenster aus Stahl. Zusätzlich wird auf Grund der Gewichtsreduzierung der Schwerpunkt des Fahrzeugs weiter nach unten verlagert, was einen positiven Einfluss auf das Fahrverhalten hat. Zudem können polymere Werkstoffe im Vergleich zu Metallen bei deutlich niedrigeren Temperaturen hergestellt, bearbeitet und verformt werden. Dies senkt den Energiebedarf und die Kosten bei der Herstellung der Werkstoffe.

Formteile aus polymeren Werkstoffen können dabei in nahezu jeder gewünschten Form und Geometrie hergestellt werden. Spezielle Hochleistungskunststoffe wie Aramide, beispielsweise Kevlar, weisen sehr hohe Festigkeit und Stabilität auf.

Viele Werkstoffteile aus Kunststoff müssen verschiedenen Anforderungen und Funktionen gerecht werden. Wichtige Parameter sind hierbei die Stabilität, Bruchverhalten, Kratzfestigkeit, Schlagzähigkeit oder Kerbschlagzähigkeit. Neben technischen Gesichtspunkten wie Gewicht und Festigkeit der einzelnen Bauteile spielen auch die Form, Geometrie und das Aussehen eine zunehmend wichtigere Rolle. Vor allem in der Automobilindustrie sind neben mechanischen Eigenschaften auch Design und Ästhetik von großer Bedeutung.

Um verschiedene Merkmale in polymeren Werkstoffen zu vereinen, werden diese aus unterschiedlich geformten und aus unterschiedlich beschaffenen Grundmaterialien zusammengesetzt. Etablierte Verfahren zur Herstellung dieser Werkstoffe umfassen zwei oder mehr Komponenten Spritzgussverfahren. Auf diese Art und Weise ist es möglich, Merkmale wie beispielsweise Witterungsbeständigkeit, Oberflächenglanz und Bruchbeständigkeit oder Torsionsstabilität miteinander zu vereinen. Zudem können die Anteile an sehr teueren Werkstoffen reduziert werden.

DE 196 33 959 A1 offenbart einen Formkörper aus einem Träger und einem äußeren Zierfilm. Der äußere Film besitzt eine Zier- und eine Schutzschicht, wobei die Schutzschicht aus einer photopolymerisierbaren Harzzusammensetzung besteht.

WO 2006/094484 A1 offenbart ein Verfahren zur Herstellung eines flächigen, zwei Komponenten enthaltenden Kunststoffkarosserieteils. In einer bevorzugten Ausführungsform ist die erste Komponente aus einem transparenten Polycarbonat und die zweite Komponente aus einem opaken Polycarbonat.

DE 197 22 551 A1 offenbart ein Verfahren zur Herstellung von Kunststoffteilen im Zwei-Komponenten-Spritzgussverfahren.

EP 1 695 808 A1 offenbart ein Zierteil für ein Kraftfahrzeug, beispielsweise eine Zierleiste. Das Zierteil umfasst ein Trägerteil aus einem thermoplastischen Kunststoff und ein Deckteil. Das Zierteil wird bevorzugt über einen Mehr-Komponenten Spritzgussprozess hergestellt.

EP 2 272 718 A1 offenbart ein Säulenabdeckung nach dem Oberbegriff von Anspruch 1.

Um das Gewicht der Säulenabdeckung weiter zu reduzieren, können die abstehenden Bauteile wie beispielsweise der Fensterführungssteg ausgedünnt werden. Um gleichzeitig die Stabilität zu erhöhen und die Bruchgefahr der abstehenden ausgedünnten Bauteile zu minimieren, werden von außen im ausgedünnten Bereich Verstärkungsrippen angespritzt. Diese Verstärkungsrippen können die Bruchstabilität des abstehenden, ausgedünnten Bauteils jedoch nur geringfügig erhöhen. Zudem können außen angespritzte Verstärkungsrippen aufgrund des höheren Platzbedarfs den Einbau der Säulenabdeckung erschweren.

Die Erfindung hat die Aufgabe, ein Werkstück bereitzustellen, welches im Bereich einer abstehenden und ausgedünnten Komponente eine erhöhte Festigkeit und Bruchstabilität aufweist.

Die Aufgabe der Erfindung wird durch eine Säulenabdeckung für Fahrzeuge gemäß Anspruch 1 gelöst. Bevorzugte Ausführungen gehen aus den Unteransprüchen hervor.

Die erfindungsgemäße Verwendung der Säulenabdeckung für Fahrzeuge geht aus einem weiteren unabhängigen Anspruch hervor. Bevorzugte Ausführungen gehen aus den Unteransprüchen hervor.

Die erfindungsgemäße Säulenabdeckung für Fahrzeuge umfasst mindestens ein polymeres Trägerteil mit einem integrierten abstehenden Bauteil (Fensterführungssteg) sowie einer Verjüngung zwischen dem polymeren Trägerteil und dem Fensterführungssteg. Der bevorzugt angespritzte Fensterführungssteg steht vom eigentlichen Trägerteil ab und die genaue Dimensionierung hängt von der Geometrie des passenden Werkstücks am Fahrzeug ab. Der Fensterführungssteg ist bevorzugt näherungsweise L-förmig ausgebildet und weist bevorzugt im abstehenden Bereich einen Winkel von 45° bis 135° zur Grundfläche des polymeren Trägerteils auf. Der Fensterführungssteg weist bevorzugt in beiden Teilstegen eine Länge von jeweils 10 mm bis 20 mm auf. Der Ausdruck "verjüngt" bedeutet im Sinne der Erfindung eine lineare oder graduelle Abnahme der Dicke des Fensterführungsstegs benachbart oder angrenzend zur Grundfläche des polymeren Trägerteils. Diese Abnahme der Dicke des integrierten abstehenden Bauteils reduziert optische Einfallstellen auf der Sichtseite des Bauteils und erlaubt eine Gewichtsreduzierung der Säulenabdeckung und eine Ersparnis an polymerem Ausgangsmaterial.

Der Fensterführungssteg ist bevorzugt aus demselben Werkstoff wie das polymere Trägerteil gefertigt und wird bevorzugt durch mit entsprechenden Aussparungen in den Formwerkzeugen im Spritzgussverfahren hergestellt. Innerhalb der Verjüngung sind Versteifungsrippen angebracht. Der Ausdruck "innerhalb" schließt im Sinne der Erfindung eine Ausgestaltung der Versteifungsrippe über die Verjüngung hinaus ein. Die Versteifungsrippen erhöhen die Stabilität, Bruch- und Schlagfestigkeit der Säulenabdeckung.

Das polymere Trägerteil umfasst bevorzugt ein Montageelement entgegengesetzt zu dem Fensterführungssteg. Das Montageelement ist bevorzugt F-förmig ausgebildet. Die genaue Formgebung des Montageelementes richtet sich dabei nach dem entsprechenden Gegenstück der Karosserie. Das Montageelement dient bevorzugt zur Karosserieverankerung.

Das polymere Trägerteil sorgt für die Stabilität der Säulenabdeckung und beinhaltet polymere Materialien, bevorzugt thermoplastische Polymere, mit einer möglichst hohen Festigkeit, Schlagzähigkeit oder Kerbschlagzähigkeit und geringere Bruchneigung. Mit dem polymeren Trägerteil ist ein polymeres Deckteil über eine Kontaktfläche verbunden. Der Ausdruck "Kontaktfläche" beschreibt die Grenzfläche zwischen dem polymeren Trägerteil und dem polymeren Deckteil. Das polymere Deckteil kann sowohl dekorative Funktionen als auch Funktionen im Bereich der Werkzeugbeständigkeit übernehmen. Beispiele hierfür sind Oberflächen oder Beschichtungen, welche die witterung-, UV- oder chemische Beständigkeit der Säulenabdeckung erhöhen. Das polymere Trägerteil und das polymere Deckteil bilden ein gemeinsames abgerundetes Endstück. Der Ausdruck "Endstück" bezieht sich im Sinne der Erfindung bevorzugt auf einen Bereich in dem die Gesamtdicke aus polymerem Trägerteil und polymerem Deckteil graduell oder linear abnimmt.

Je nach Geometrie der Säulenabdeckung können noch weitere gemeinsame, bevorzugt abgerundete, Endstücke vorhanden sein. Diese Kantengeometrie kann umlaufend an allen gemeinsamen Kanten vom polymeren Trägerteil und polymeren Deckteil innerhalb der Säulenabdeckung oder nur an einzelnen Bauteilkanten ausgebildet sein. Die gesamte Säulenabdeckung wird bevorzugt in einem Verfahrensschritt in einem zwei- oder Mehrkomponenten-Spritzgussverfahren oder Mehrkomponenten-Spritzprägeverfahren hergestellt. In einem alternativen Verfahren kann das polymere Trägerteil mit Verjüngung und dem Fensterführungssteg in einem Spritzgussverfahren hergestellt werden. Das polymere Trägerteil kann anschließend mit einem ebenfalls in einem Spritzgussverfahren hergestellten polymeren Deckteil verbunden werden.

Die Verjüngung verjüngt sich bevorzugt von 4 mm bis 1 mm auf 2 mm bis 0,2 mm. Diese Abmessungen erlauben eine hohe Stabilität innerhalb des Ansatzes bei gleichzeitig minimalem Gewicht und hoher optischer Güte. Der Ansatz verjüngt sich bevorzugt über eine Länge von 3 mm bis 20 mm, bevorzugt 5 mm bis 10 mm auf den oben genannten Bereich. Die Verjüngung erlaubt eine Einsparung an Material und Gewicht des fertigen Bauteils und verbessert die Reflexionsoptik auf der Sichtseite des Bauteils.

Es sind mehrere Versteifungsrippen innerhalb der Verjüngung angebracht. Es sind bevorzugt 5 bis 30 Versteifungsrippen innerhalb der Verjüngung angebracht. Die Platzierung mehrerer Versteifungsrippen erlaubt die gezielte Verstärkung von möglichen bruchanfälligen Bereichen innerhalb der Verjüngung.

Die Versteifungsrippen sind über die Verjüngung hinaus ausgebildet. Die Versteifungsrippen stützen über die Verjüngung hinaus das integrierte abstehende Bauteil

Das integrierte abstehende Bauteil umfasst beeinen Fensterführungssteg eines Kraftfahrzeuges.

Das polymere Trägerteil enthält bevorzugt Polyethylen (PE), Polycarbonate (PC), Polypropylen (PP), Polystyrol, Polybutadien, Polynitrile, Polyester, Polyurethane, Polymethylmetacrylate, Polyacrylate, Polyester, Polyamide, Polyethylenterephthalat (PET), bevorzugt Acrylnitril-Butadien-Styrol (ABS), Acrylester-Styrol-Acrylnitril (ASA), Acrylnitril-Butadien-Styrol - Polycarbonat (ABS+PC) und/oder Copolymere oder Gemische davon.

Der Fensterführungssteg und/oder das Montageelement weisen bevorzugt an der Oberfläche eine Wandstärkenausdünnung auf 0,5 mm bis 3 mm auf, wobei die ausgedünnte Grundwand des Fensterführungsstegs und/oder das Montageelement bevorzugt durch eine wabenartige, kreisförmige oder poligonale erhöhte Oberflächenstruktur, besonders bevorzugt eine hexagonale erhöhte bienenwabenartige Oberflächenstruktur verstärkt werden. Die erhöhte Oberflächenstruktur gewährleistet auch bei Ausdünnung der Wandstärke die Stabilität und Bruchsicherheit des Fensterführungsstegs und/oder des Montageelements. Die Wandstärkenausdünnung verringert das Gewicht der Säulenabdeckung. Die erhöhte Struktur weist bevorzugt eine Dicke von 0,2 mm bis 1,5 mm auf. Die Gesamtdicke aus Fensterführungsstegs und der erhöhten Oberflächenstruktur ist bevorzugt um den Faktor 1,2 bis 3 größer ist als die Dicke des darunterliegenden Fensterführungsstegs. Der genannte Faktor gewährleistet ein optimales Gewicht- zu Stabilitätsverhältnis des Fensterführungsstegs.

Die erhöhte Oberflächenstruktur weist bevorzugt eine Schrägstellung von 1 ° bis 15 ° relativ zur Senkrechten auf der Oberfläche des Fensterführungsstegs und/oder das Montageelements unterhalb der Oberflächenstruktur auf. Diese Entformungsschräge verbessert das Herauslösen des bruchempfindlichen Fensterführungsstegs und/oder das Montageelements aus der Spritzgussform.

Der Fensterführungssteg und/oder das Montageelement weisen in einer optionalen Ausgestaltungsform die erhöhte Oberflächenstruktur an Bereichen des Fensterführungsstegs und/oder das Montageelement ohne Wandstärkenausdünnung auf.

Das polymere Deckteil enthält bevorzugt Polycarbonate (PC), Polymethylmethacrylat (PMMA), Styrol-Acrylnitril (SAN) und/oder Copolymere oder Gemische davon. Diese Polymere erlauben eine Verarbeitung zu hochglänzenden, je nach Anwendungszweck teilweise glasähnlichen Oberflächen.

Das polymere Trägerteil enthält bevorzugt anorganische oder organische Füllstoffe, besonders bevorzugt SiO₂, Al₂O₃, TiO₂, Tonmineralien, Silikate, Zeolithe, Glasfasern, Kohlenstofffasern, Glaskugeln, organische Fasern und/oder Gemische davon. Die Füllstoffe können die Stabilität des Trägerteils weiter erhöhen. Zudem können die Füllstoffe den Anteil an polymeren Materialien verringern und so die Herstellungskosten des Bauteils vermindern.

Das Montageelement weist bevorzugt eine Dichtlippe entgegengesetzt zu dem Endstück auf. Die Dichtlippe ermöglicht einen flexiblen und abdichtenden Einbau der Säulenabdeckung im Fahrzeug.

Das polymere Deckteil enthält bevorzugt einen Hardcoat, besonders bevorzugt thermisch- oder UV-härtende Lacke, besonders bevorzugt Polysiloxane, Polyacrylate, Polymethacrylate und/oder Gemische oder Copolymere davon. Der Hardcoat verbessert die Beständigkeit gegenüber mechanischen Kratzbeschädigungen, Witterungseinflüssen, Temperaturschwankungen, UV-Strahlung und/oder aggressiven Chemikalien aus der Luft oder dem Spritzwasser. Zusätzlich kann der Hardcoat auch noch dekorative Funktionen wahrnehmen.

Das polymere Deckteil weist bevorzugt eine mittlere optische Transparenz von mehr als 60 %, bevorzugt mehr als 80 % im Bereich von 400 nm bis 800 nm auf. Die hohe optische Transparenz verleiht dem polymeren Deckteil ein glasähnliches Aussehen bei nur geringem Eigengewicht und einer hohen Verformbarkeit.

Die Versteifungsrippen weisen bevorzugt einen Abstand von 1 cm bis 15 cm, bevorzugt 2 cm bis 10 cm zueinander auf. Die so platzierten Versteifungsrippen erhöhen deutlich die Stabilität und Bruchsicherheit des Fensterführungsstegs. Der genaue Abstand der Versteifungsrippen hängt weiterhin vom verwendeten Material des polymeren Deckteils und der geforderten Stabilität der Säulenabdeckung ab.

Das integrierte, abstehende Bauteil weist bevorzugt auf der der Verjüngung gegenüberliegenden Seite Verstärkungsrippen auf, welche die Stabilität des Fensterführungsstegs weiter erhöhen.

Die erfindungsgemäße Säulenabdeckung enthält besonders bevorzugt Versteifungsrippen innerhalb des verjüngten Ansatzes sowie Verstärkungsrippen im Bereich angrenzend und außerhalb des verjüngten Ansatzes,

Die Erfindung umfasst des Weiteren die Verwendung der Säulenabdeckung in Fahrzeugen, bevorzugt Kraftfahrzeugen, Lastkraftwagen, Bussen, besonders bevorzugt als Zierleiste in Kraftfahrzeugen.

Im Folgenden wird die Erfindung anhand von Zeichnungen näher erläutert. Die Zeichnungen sind rein schematische Darstellungen und nicht maßstabsgetreu. Sie schränken die Erfindung in keiner Weise ein.

Es zeigen:
Figur 1 einen Querschnitt einer Säulenabdeckung nach dem Stand der Technik,
Figur 2 einen Querschnitt einer nicht erfindungsgemäßen Säulenabdeckung,
Figur 3 einen Querschnitt einer bevorzugten Ausführungsform der nicht erfindungsgemäßen Säulenabdeckung,
Figur 4 eine dreidimensionale Ansicht einer bevorzugten Ausführungsform der Säulenabdeckung und
Figur 5 einen schematischen Querschnitt von drei alternative Ausführungsformen der Versteifungsrippen.

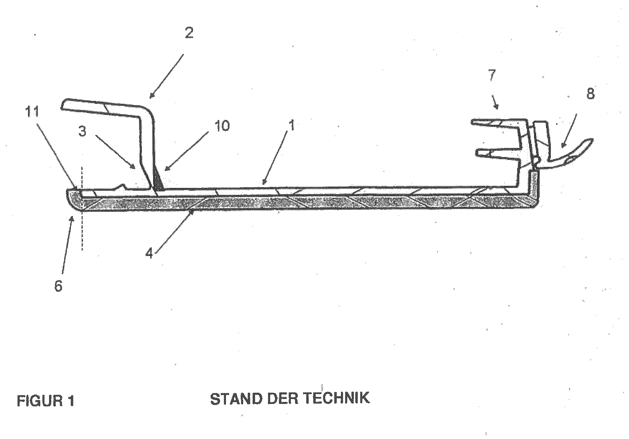

Figur 1 zeigt einen Querschnitt einer Säulenabdeckung nach dem Stand der Technik. Ein polymeres Trägerteil (1) umfasst ein angespritztes, integriertes abstehendes Bauteil (2), in diesem Fall ein Fensterführungssteg (2). Das polymere Trägerteil (1) umfasst weiterhin ein F-förmiges Montageelement (7) mit einer Dichtlippe (8) und ist von einem polymeren Deckteil (4) umgeben. Der Fensterführungssteg (2) ist über eine Verjüngung (3) mit dem polymeren Trägerteil (1) verbunden. Außerhalb der Verjüngung (3) ist eine Verstärkungsrippe (10) angebracht. Die Verstärkungsrippe (10) erhöht die Bruchfestigkeit des Fensterführungsstegs (2), benötigt aber zusätzlichen Platzt auf dem polymeren Trägerteil (1). Entlang der Kontaktfläche (11) gehen das polymere Trägerteil (1) und das polymere Deckteil (4) in ein Endstück (6) über.

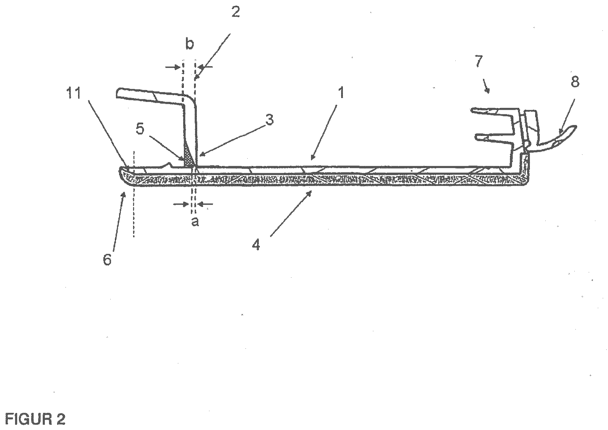

Figur 2 zeigt einen schematischen Querschnitt einer nicht erfindungsgemäßen Säulenabdeckung. Der Grundaufbau aus polymerem Trägerteil (1) mit Fensterführungssteg (2), F-förmigen Montageelement (7) mit einer Dichtlippe (8) und polymerem Deckteil (4) entspricht dem in Figur 1 gezeigten. Im Unterschied dazu ist eine Versteifungsrippe (5) innerhalb des verjüngten Ansatzes (3) angeordnet und erlaubt eine wirksame Stabilisierung des Fensterführungsstegs (2) ohne zusätzlichen Platzbedarf. Der Fensterführungssteg (2) nimmt innerhalb der Verjüngung (3) vom Durchmesser (b) auf den kleineren Durchmesser (a) im Bereich von 4 mm bis 1 mm auf 2 mm bis 0,2 mm ab.

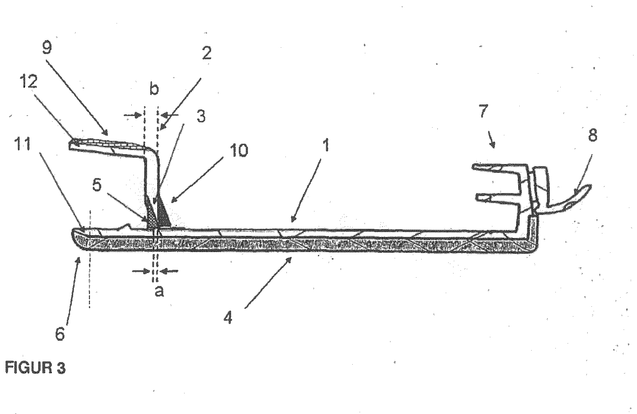

Figur 3 zeigt einen schematischen Querschnitt einer bevorzugten Ausführungsform der nicht erfindungsgemäßen Säutenabdeckung. Der Grundaufbau aus polymerem Trägerteil (1) mit Fensterführungssteg (2), F-förmigen Montageelement (7) mit einer Dichtlippe (8), polymerem Deckteil (4) und Versteifungsrippe (5) entspricht dem in Figur 2 gezeigten.

Der Fensterführungssteg (2) weißt noch außerhalb der Verjüngung (3) angebrachte Verstärkungsrippen (10) und eine Wandstärkenausdünnung (12) auf eine Dicke von 0,5 mm bis 3 mm auf. Eine erhöhte Oberflächenstruktur (9) im Bereich der Wandstärkenausdünnung (12) und die Verstärkungsrippen (10) erhöhen die Stabilität und Bruchfestigkeit des Fensterführungsstegs (2).

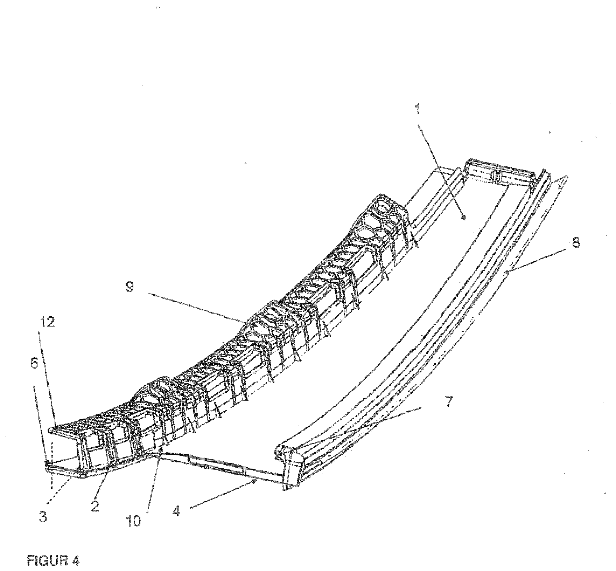

Figur 4 zeigt eine dreidimensionale Ansicht einer bevorzugten Ausführungsform der Säulenabdeckung. Der Aufbau entspricht dem in Figur 3 gezeigten. Die erhöhte, wabenartige Oberflächenstruktur (9) ist in Form von regelmäßigen Sechsecken flächendeckend auf der Oberfläche des Fensterführungsstegs (2) angeordnet. Die erhöhte Oberflächenstruktur (9) gewährleistet eine ausreichende Stabilität des Fensterführungsstegs (2) bei gleichzeitiger Wandstärkenausdünnung (12) auf eine Dicke von 0,5 mm bis 3 mm. Zudem erleichtert die Oberflächenstruktur (9) das Entformen der Säulenabdeckung aus dem Spritzgießwerkzeug während des Herstellungsprozesses. Die Verstärkungsrippen (10) können sowohl in regelmäßigem als auch unregelmäßigem Abstand an der Außenseite des Fensterführungsstegs (2) angeordnet werden.

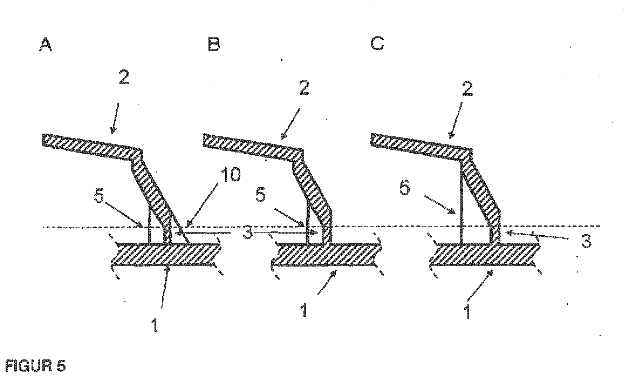

Figur 5 zeigt einen schematischen Querschnitt von drei alternative Ausführungsformen der Versteifungsrippen (A, B, C).

In der ersten Variante (A) geht die Versteifungsrippe (5) über die Verjüngung (3) unterhalb der gestrichelten Linie hinaus. Die Versteifungsrippe (5) stützt somit das vom polymeren Trägerteil (1) abstehende integrierte Bauteil (2) über die Verjüngung (3) hinaus. Um Belastungen abzufangen, die von der Versteifungsrippe (5) weg gerichtet sind, ist noch eine Verstärkungsrippe (10) auf der der Versteifungsrippe (5) entgegengesetzten Seite angeordnet.

Die zweite Variante (B) entspricht der ersten Variante (A) ohne zusätzliche Verstärkungsrippe (10).

Die dritte Variante (C) entspricht im Grundaufbau der zweiten Variante (B). Die Versteifungsrippe (5) ragt in diesem Beispiel aber weit über die Verjüngung (3) hinaus und stützt sowie verstärkt einen großen Teil des integrierten, abstehenden Bauteils (2).

### Bezugszeichenliste

- (1): polymeres Trägerteil
- (2): integriertes abstehendes Bauteil/Fensterführungssteg
- (3): Verjüngung
- (4): polymeres Deckteil
- (5): Versteifungsrippe
- (6): Endstück
- (7): Montageelement
- (8): Dichtlippe
- (9): erhöhte Oberflächenstruktur
- (10): Verstärkungsrippe
- (11): Kontaktfläche
- (12): Wandstärkenausdünnung
- (a): minimale Abmessung des verjüngten Ansatz
- (b): maximale Abmessung des verjüngten Ansatz
- (A),(B), (C): Variationen des Fensterführungsstegs

## Patentansprüche

1. Säulenabdeckung für Fahrzeuge wobei mindestens:
a. ein Trägerteil (1) mit einem integrierten Fensterführungssteg (2) und einem Montageelement (7),
b. eine Verjüngung (3) an der Berührungsstelle des Fensterführungsstegs (2) zum Trägerteil (1),
c. ein mit dem Trägerteil (1) über eine Kontaktfläche (11) verbundenes Deckteil (4), **dadurch gekennzeichnet, dass**
d. mehrere Versteifungsrippen (5) innerhalb der Verjüngung (3) angebracht und über die Verjüngung (3) hinaus ausgebildet sind und über die Verjüngung (3) hinaus den Fensterführungssteg (2) stützen.

2. Säulenabdeckung nach Anspruch 1, wobei die Verjüngung (3) sich von einer Breite von 4 mm bis 1 mm auf 2 mm bis 0,2 mm hin verjüngt.

3. Säulenabdeckung nach Anspruch 1 oder 2, wobei der Fensterführungssteg (2) näherungsweise L-förmig ausgebildet ist.

4. Säulenabdeckung nach einem der Ansprüche 1 bis 3, wobei das Trägerteil (1) Polyethylen (PE), Polycarbonate (PC), Polypropylen (PP), Polystyrol, Polybutadien, Polynitrile, Polyester, Polyurethane, Polymethylmethacrylat, Polyacrylate, Polyamide, Polyethylenterephthalat (PET), Polybutylenterephthalat (PBT), bevorzugt Acrylnitril-Butadien-Styrol (ABS), Acrylester-Styrol-Acrylnltril (ASA), Acrylnitril-Butadien-Styrol - Polycarbonat (ABS/PC), PET+PC, PBT+PC und/oder Copolymere oder Gemische davon enthält.

5. Säulenabdeckung nach einem der Ansprüche 1 bis 3, wobei der Fensterführungssteg (2) und/oder das Montageelement (7) eine Wandstärkenausdünnung (12) auf eine Dicke von 0,5 mm bis 3 mm aufweist.

6. Säulenabdeckung nach einem der Ansprüche 1 bis 5, wobei der Fensterführungssteg (2) und/oder das Montageelement (7) eine erhöhte Oberflächenstruktur (9), bevorzugt eine wabenartige kreisförmige oder poligonale erhöhte Oberflächenstruktur (9), besonders bevorzugt eine hexagonale erhöhte Oberflächenstruktur (9) aufweist.

7. Säulenabdeckung nach Anspruch 6, wobei die erhöhte Oberflächenstruktur (9) auf der Wandstärkenausdünnung (12) angeordnet ist.

8. Säulenabdeckung nach einem der Ansprüche 1 bis 7, wobei das Deckteil (4) Polycarbonate (PC), Polymethylmethacrylat (PMMA), Styrol-Acrylnitril (SAN) und/oder Copolymere oder Gemische davon enthält.

9. Säulenabdeckung nach einem der Ansprüche 1 bis 8, wobei das Montageelement (7) F-förmig ausgebildet ist.

10. Säulenabdeckung nach einem der Ansprüche 1 bis 9, wobei das Trägerteil (1) anorganische oder organische Füllstoffe, bevorzugt SiO₂, Al₂O₃, TiO₂, Tonmineralien, Silikate, Zeolithe, Glasfasern, Kohlenstofffasern, Glaskugeln, organische Fasern und/oder Gemische davon enthält.

11. Säulenabdeckung nach einem der Ansprüche 1 bis 10, wobei das Montageelement (7) eine Dichtlippe (8) aufweist.

12. Säulenabdeckung nach einem der Ansprüche 1 bis 11, wobei das Deckteil (4) einen Hardcoat, bevorzugt thermisch- oder UV-härtende Lacke, besonders bevorzugt Polysiloxane, Polyacrylate, Polymethacrylate und/oder Gemische oder Copolymere davon enthält.

13. Säulenabdeckung nach einem der Ansprüche 1 bis 12, wobei die Versteifungsrippen (5) einen Abstand von 1 cm bis 15 cm, bevorzugt 2 cm bis 10 cm aufweisen.

14. Säulenabdeckung nach einem der Ansprüche 1 bis 13, wobei der Fensterführungssteg (2) Verstärkungsrippen (10) aufweist.

15. Verwendung der Säulenabdeckung nach einem der Ansprüche 1 bis 9 in Fahrzeugen, bevorzugt Kraftfahrzeugen, Lastkraftwagen, Bussen, besonders bevorzugt als Zierleiste in Kraftfahrzeugen.

## Claims

1. Pillar covering for vehicles wherein at least:
a. a carrier part (1) with an integrated window guide web (2) and a mounting element (7),
b. a narrowing (3) at the point of contact of the window guide web (2) with the carrier part (1),
c. a cover part (4) connected to the carrier part (1) via a contact surface (11), **characterized in, that**
d. multiple stiffening ribs (5) are fitted inside the narrowing (3) and are formed beyond the narrowing (3) and support the window guide web (2) beyond the narrowing (3).

2. Pillar covering according to claim 1, wherein the narrowing (3) tapers from a width of 4 mm to 1 mm down to 2 mm to 0.2 mm.

3. Pillar covering according to claim 1 or 2, wherein the window guide web (2) is implemented approx. L-shaped.

4. Pillar covering according to one of claims 1 through 3, wherein the carrier part (1) contains polyethylene (PE), polycarbonates (PC), polypropylene (PP), polystyrene, polybutadiene, polynitriles, polyesters, polyurethanes, polymethyl methacrylates, polyacrylates, polyamides, polyethylene terephthalate (PET), polybutylene terephthalate (PBT), preferably acrylonitrile-butadiene-styrene (ABS), acrylester-styrene-acrylonitrile (ASA), acrylonitrile-butadiene-styrene - polycarbonate (ABS/PC), PET+PC, PBT+PC, and/or copolymers or mixtures thereof.

5. Pillar covering according to one of claims 1 through 3, wherein the window guide web (2) and/or the mounting element (7) has a wall thickness thinning (12) to a thickness of 0.5 mm to 3 mm.

6. Pillar covering according to one of claims 1 through 5, wherein the window guide web (2) and/or the mounting element (7) has a raised surface structure (9), preferably a honeycomb circular or polygonal raised surface structure (9), particularly preferably a hexagonal raised surface structure (9).

7. Pillar covering according to claim 6, wherein the raised surface structure (9) is disposed on the wall thickness thinning (12).

8. Pillar covering according to one of claims 1 through 7, wherein the cover part (4) contains polycarbonates (PC), polymethyl methacrylate (PMMA), styrene-acrylonitrile (SAN), and/or copolymers or mixtures thereof.

9. Pillar covering according to one of claims 1 through 8, wherein the mounting element (7) is configured F-shaped.

10. Pillar covering according to one of claims 1 through 9, wherein the carrier part (1) contains inorganic or organic fillers, preferably SiO₂, Al₂O₃, TiO₂, clay minerals, silicates, zeolites, glass fibers, carbon fibers, glass beads, organic fibers, and/or mixtures thereof.

11. Pillar covering according to one of claims 1 through 10, wherein the mounting element (7) has a sealing lip (8).

12. Pillar covering according to one of claims 1 through 11, wherein the cover part (4) includes a hard coat, preferably a thermal- or UV-curing coating, particularly preferably polysiloxanes, polyacrylates, polymethacrylates, and/or mixtures or copolymers thereof.

13. Pillar covering according to one of claims 1 through 12, wherein the stiffening ribs (5) are from 1 cm to 15 cm apart, preferably 2 cm to 10 cm.

14. Pillar covering according to one of claims 1 through 13, wherein the window guide web (2) has reinforcing ribs (10).

15. Use of the pillar covering according to one of claims 1 through 9 in vehicles, preferably motor vehicles, trucks, buses, particularly preferably as a trim strip in motor vehicles.

## Revendications

1. - Habillage de montant pour véhicules comportant au moins :
a) une partie de support (1) avec une baguette de guidage de vitre intégrée (2) et un élément de montage (7) ;
b) un rétrécissement (3) au point de contact de la baguette de guidage de vitre (2) avec la partie de support (1) ;
c) une partie de recouvrement (4) reliée à la partie de support (1) par l'intermédiaire d'une surface de contact (11), **caractérisé par le fait que**
d) plusieurs nervures de rigidification (5) sont attachées à l'intérieur du rétrécissement (3) et formées au-delà du rétrécissement (3) et soutiennent la baguette de guidage de vitre (2) au-delà du rétrécissement (3).

2. - Habillage de montant selon la revendication 1, dans lequel le rétrécissement (3) s'effile d'une largeur de 4 mm à 1 mm à 2 mm à 0,2 mm.

3. - Habillage de montant selon l'une des revendications 1 ou 2, dans lequel la baguette de guidage de vitre (2) est réalisée sensiblement en forme de L.

4. - Habillage de montant selon l'une des revendications 1 à 3, dans lequel la partie de support (1) contient du polyéthylène (PE), des polycarbonates (PC), du polypropylène (PP), du polystyrène, du polybutadiène, des polynitriles, du polyester, des polyuréthanes, du poly(méthacrylate de méthyle), des polyacrylates, des polyamides, du poly(téréphtalate d'éthylène) (PET), du poly(téréphtalate du butylène) (PBT), de préférence de 1'acrylonitrile-butadiène-styrène (ABS), de l'ester-acrylique-styrène-acrylonitrile (ASA), de 1'acrylonitrile-butadiène-styrène/polycarbonate (ABS/PC), PET+PC, PBT+PC et/ou leurs copolymères ou mélanges.

5. - Habillage de montant selon l'une des revendications 1 à 3, dans lequel la baguette de guidage de vitre (2) et/ou l'élément de montage (7) présentent un amincissement d'épaisseur de paroi (12) à une épaisseur de 0,5 mm à 3 mm.

6. - Habillage de montant selon l'une des revendications 1 à 5, dans lequel la baguette de guidage de vitre (2) et/ou l'élément de montage (7) présentent une structure de surface (9) en relief, de préférence une structure de surface (9) en relief circulaire ou polygonale en nid d'abeilles, de façon particulièrement préférée une structure de surface (9) en relief hexagonale.

7. - Habillage de montant selon la revendication 6, dans lequel la structure de surface (9) en relief est disposée sur l'amincissement d'épaisseur de paroi (12).

8. - Habillage de montant selon l'une des revendications 1 à 7, dans lequel la partie de recouvrement (4) contient des polycarbonates (PC), du poly(méthacrylate de méthyle) (PMMA), du styrène-acrylonitrile (SAN) et/ou leurs copolymères ou mélanges.

9. - Habillage de montant selon l'une des revendications 1 à 8, dans lequel l'élément de montage (7) est réalisé en forme de F.

10. - Habillage de montant selon l'une des revendications 1 à 9, dans lequel la partie de support (1) contient des charges inorganiques ou organiques, de préférence SiO₂, Al₂O₃, TiO₂, des minéraux argileux, des silicates, des zéolites, des fibres de verre, des fibres de carbone, des billes de verre, des fibres organiques et/ou leurs mélanges.

11. - Habillage de montant selon l'une des revendications 1 à 10, dans lequel l'élément de montage (7) présente une lèvre d'étanchéité (8).

12. - Habillage de montant selon l'une des revendications 1 à 11, dans lequel la partie de recouvrement (4) contient un revêtement dur, de préférence, des laques durcissant thermiquement ou aux UV, de façon particulièrement préférée des polysiloxanes, des polyacrylates, des polyméthacrylates et/ou leurs mélanges ou copolymères.

13. - Habillage de montant selon l'une des revendications 1 à 12, dans lequel les nervures de rigidification (5) présentent une distance de 1 cm à 15 cm, de préférence de 2 cm à 10 cm.

14. - Habillage selon l'une des revendications 1 à 13, dans lequel la baguette de guidage de vitre (2) présente des nervures de renforcement (10).

15. - Utilisation de l'habillage de montant selon l'une des revendications 1 à 9 dans des véhicules, de préférence des véhicules automobiles, des camions, des bus, de façon particulièrement préférée comme moulure dans des véhicules automobiles.
